# EUROPEAN PATENT APPLICATION

(11) **EP 1 518 657 A2**
(43) Date of publication of application: **30.03.2005**
(21) Application number: 04077613.0
(22) Date of filing: 22.09.2004
(51) Int. Cl.: B29C 45/36, F17D 1/06

(54) **Moulding method for producing tubular steam-conveying elements and tubular steam-conveying elements**

(30) Priority: 23.09.2003 IT PD20030219
(71) Applicant: ARKE' S.r.l., 35100 Montegrotto (PD) (IT)
(72) Inventor: Bova, Giuseppe, 35100 Padova (IT)
(74) Representative: Gerbino, Angelo

(57) **Abstract**

The present invention relates to a method for the injection-moulding of plastics in order to produce tubular steam-conveying elements, comprising a step involving provision of at least one mould (B) shaped for forming of a tubular element (1;1a), a step involving insertion of a male element (C) the mould (B), a step involving retention of the male element (C) inside the mould (B) by means of clamping means (E) mechanically associated with the mould (B); a step involving injection of plastic into the mould (B) in order to obtain a tubular conveying element (1;1a), a step involving removal of the clamping means (E), a step involving extraction of the male element (C) and a step involving removal of the tubular element (1;1a) from the mould (B).

The step involving removal of the clamping means takes place during the injection step when the plastic is in the vicinity of or in contact with the clamping means (E).

This moulding method envisages that the mould (B) is shaped for the forming of a tubular element (1;1a) comprising an outer shell (5) and an inner pipe (6). At least part of the outer shell (5) is provided with a finned surface which defines a plurality of channels (20) through which the clamping means (E) act so as to grip the male element (C) during the retention step, being inserted into holes (F) provided on the mould at the bottom of the channels (20).

## Description

### Technical field

The present invention relates to a moulding method for producing tubular steam-conveying elements made of plastic and to tubular elements which can be obtained using this method.

The tubular elements forming the subject of the present invention may be advantageously used as accessories of steam generating machines intended for cleaning objects, garments or surfaces in both the industrial and domestic sector. These elements may be used, in particular, as modular components of extensions for steam supply pipes and as gripping handles for these pipes.

### Background art

As is known, steam generating means are equipped conventionally with a tank for storing the water which is vaporized by means of electrical resistors. Preferably, in order to avoid calcareous deposits, demineralised water is used. The steam produced is then conveyed via steam conveying pipes to the supply and cleaning devices which come into contact with the surfaces to be treated. These devices may consist of brushes, nozzles, sprayers or unions of vary sizes and are interchangeable depending on the user's requirements.

Generally, the main part of the length of the steam conveying pipes is composed of flexible elements which ensure that the user has ample freedom of movement, increasing the radius of action of the user without the need to move the machine.

As is known, in order to allow the operator to manipulate the supply devices, manoeuvring them in the desired manner, it is required to equip the steam supply pipe with a gripping portion which can be easily and securely held and which in most cases simply consists of a section of rigid tube. In order to improve and facilitate the cleaning operations, these rigid gripping elements are usually formed so that they can be coupled together in series so as to form a rigid modular extension according to the user's requirements. Generally, this - single or modular - gripping element is the end part of the entire steam conveying pipe and the various cleaning or supply devices are connected to it.

The functions which this rigid tube section (referred to below as "gripping handle") must perform are, firstly, that of ensuring suitable thermal insulation from the hot fluid which is conveyed inside it so that the part may be handled and, secondly, that of acting as a support for the force applied by the user during the cleaning or steam supplying operations.

The rigid-tube gripping handle is usually composed of a first tubular element which acts as an outer shell and a second tubular element which is situated inside the first element and acts as a steam conveying pipe. Generally the considerable thickness with which the walls of the outer shell are formed is sufficient to ensure good thermal insulation and a high mechanical strength.

A gripping handle thus configured is generally made by means of the injection-moulding of plastic using different methods depending on the length which is to be obtained.

In the case of fairly large lengths, for example greater than 25 cm, it is envisaged performing moulding of the outer shell separate from that of the inner conveying pipe. The latter may be produced by means of moulding or by means of extrusion and is assembled with the outer shell only at a later stage. In its entirety the gripping handle is therefore usually obtained by assembling an outer rigid tubular element and an inner rigid or flexible tube which is kept in the centred position inside the outer tubular element by spacing support elements.

In the case of relatively small lengths of the gripping handle, on the other hand, the gripping handle is formed as a single monobloc part by means of a single moulding operation. In this case, the axial cavity along the conveying pipe is formed by inserting inside the mould, prior to injection of plastic, a male element of generally cylindrical shape and having dimensions corresponding to those of the pipe to be formed.

The manufacture of the gripping elements as monobloc parts is in reality preferable owing to the considerable advantages which it offers both from a production point of view and from the point of view of the performance characteristics of the product obtained. The aforementioned manufacture of the parts as a single body simplifies in fact considerably the production process, not requiring the production of the inner pipe and the associated step of assembly with the outer shell.

The monobloc gripping element is moreover stronger and more rigid and consequently more reliable than that obtained by assembling separate parts.

This moulding method may not, however, be used for the manufacture of elements having a length which is excessively large and in particular greater than 25 cm. The considerable pressure (up to 800 tons) required during injection of the plastic material subjects the male element to high forces which, if they are not perfectly balanced, may result in bending thereof as a result, in particular, of its fairly small cross-section. Operational requirements, moreover, such as pressure, speed and steam throughput impose, furthermore, limited and standardized dimensions as regards the cross-section of the inner pipe of the gripping handle and, at the same time, the process requirements are such that a substantial reduction in the injection pressure during moulding of the parts is not feasible.

The bending, twisting and generally imperfect alignment of the male element inside the mould may easily result in the production of defective poor-quality parts which in some cases are even unusable. Consequently, as already mentioned above, in the case of parts of considerable length the outer shell and the inner conveying pipe must be made separately.

In this case, for moulding of the outer shell it is possible to use a male element with larger dimensions able to withstand the high injection pressures, while the inner pipe is formed as several parts which are inserted separately inside the axial cavity of the shell. Alternatively the inner pipe is made by means of extrusion.

Furthermore, an alternative moulding process is known where it is possible to form the gripping handles as a single body without limitation as to their length. This process envisages gas-injection moulding for the production of the inner pipe, which does not require the use of a male element and therefore avoids the abovementioned drawbacks. However, this latter method involves processing procedures which are more complex and moulds which are much more costly than those required by the moulding technique involving simple injection and which in any case result in the method not being economically advantageous.

### Disclosure of the invention

In this situation, therefore, the object of the present invention is that of eliminating the drawbacks of the prior art mentioned above by providing a method for moulding steam conveying pipes which is able to produce conveying pipes of the desired length in a single moulding step.

A further object of the present invention is to provide a moulding method which allows the production of conveying pipes which do not require further processing or assembly stages.

Another object of the present invention is to provide a method for moulding conveying pipes which is low-cost and easy to implement.

A further object of the present invention is to provide tubular steam-conveying elements which are both light and mechanically strong.

These and other objects are all achieved by a method for moulding steam conveying pipes and pipes which can be obtained using this method according to the accompanying claims.

### Brief description of the drawings

The technical features of the invention, in accordance with the abovementioned objects, may be clearly determined from the contents of the claims provided below and the advantages thereof will become clearer from the detailed description below with reference to the accompanying drawings which show a purely exemplary and non-limiting embodiment in which:
- Figure 1 shows a perspective view of a first embodiment of a tubular conveying element according to the present invention;
- Figure 2 shows a perspective view of a detail of the tubular element according to the invention, relating to an end portion thereof;
- Figure 3 shows a cross-sectional view of the embodiment according to Figure 8 along the line III-III of the same figure;
- Figure 4 shows a top plan view of the embodiment according to Figure 1 in the direction of the arrow IV of the same figure;
- Figure 5 shows a cross-sectional view of the tubular element according to Figure 4 along the line V-V of the same figure;
- Figure 6 shows a cross-sectional view of the tubular element according to Figure 4, along the line VI-VI of the same figure;
- Figure 7 shows a cross-sectional view of the tubular element according to Figure 4, along the line VII-VII of the same figure;
- Figure 8 shows a side view of the embodiment according to Figure 1, in the direction of the arrow VIII of the same figure;
- Figure 9 shows a perspective view of a second embodiment of the tubular conveying element according to the invention;
- Figure 10 shows a cross-sectional view of the tubular element according to Figure 9, along the line X-X of the said figure;
- Figure 11 shows a cross-sectional view of a detail of the coupling zone of two separate tubular conveying elements;
- Figure 12 shows a particular step during the method for moulding tubular elements according to the invention;
- Figure 13 shows a cross-sectional view of the mould B shown in Figure 12, along the line XIII-XIII of the same figure;
- Figures 14 to 18 show the steps of the method for injection-moulding tubular conveying elements according to the invention.

### Detailed description

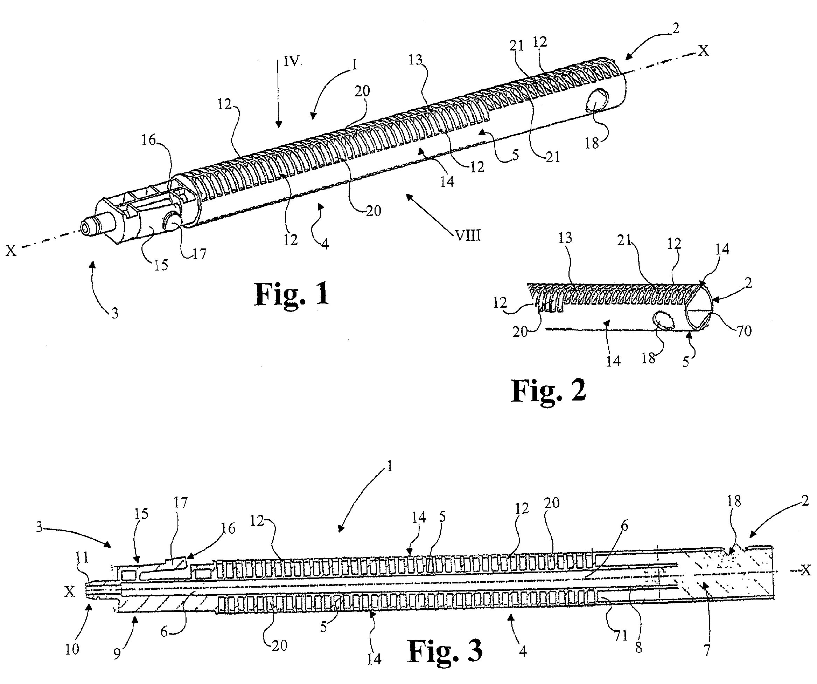

With reference to Figures 1 to 8, 1 denotes in its entirety a tubular steam-conveying element according to a first embodiment. This element 1 extends with an elongated form along a longitudinal axis denoted by X and is defined essentially by an outer shell 5 made of plastic and an inner pipe 6 for conveying the steam.

The pipe 6 extends with a preferably circular cross-section. In the operating condition, the steam flows along the pipe 6, being conveyed by the piping elements coupled upstream thereof.

Along the tubular element 1 it is possible to distinguish three different portions: a first end portion denoted by 2, a central portion denoted by 4 and a second end portion denoted by 3.

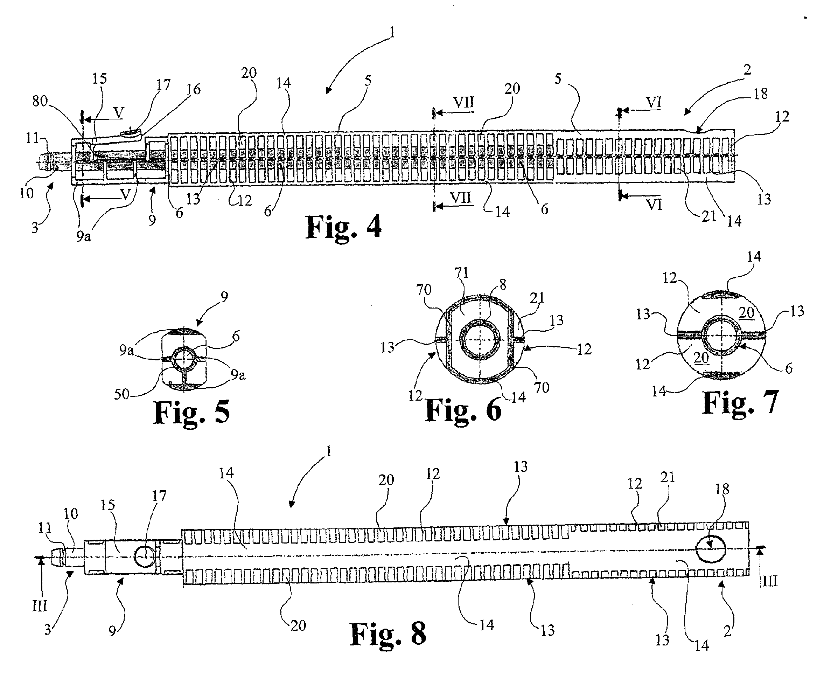

The first end portion 2 of the tubular element 1 has externally a circular cross-section and internally a cavity 7 with a cross-section defined by two arcs of a circumference connected together by two parallel chords (Figures 2 and 6). The cavity 7 is provided with a bottom part 71 from which a first tubular-shaped terminal portion 8 of the pipe 6 extends concentrically.

The central portion 4 constitutes the main part of the tubular element 1 and forms substantially the main portion which can be gripped. Along the whole length of this portion the tubular element 1 extends with its outer shell 5 continuously with respect to the first portion 2 and with its inner pipe 6 continuously with respect to the terminal portion 8.

The shell 5 of the second end portion 3 has externally a cross-section with a profile which is counter-shaped with respect to that of the cross-section of the cavity 9 namely composed of two arcs of a circumference which are connected together by two parallel chords (Figures 2 and 5). In this portion the outer shell 5 forms a connecting structure 9 having ribs 9a which are perpendicular to each other and intended to be connected to the second terminal portion 80 of the inner pipe 6 associated with this portion 3. In greater detail, the inner pipe 6 extends from the free end of the connecting structure 9 with a projecting portion 10. This projecting portion 10 has a groove 11 which acts a seat for a seal of the O-ring type.

Below the first end portion 2 is denoted by the term "socket 2" and the second end portion 3 is denoted by the term "plug 3" so as to describe their respective functions. Consequently, as mentioned above, the two portions are counter-shaped with respect to each other so as to ensure mutual engagement. The outer cross-section of the plug 3 is shaped so as to match the inner cross-section of the socket 2 and likewise the outer cross-section of the projecting portion 10 and the inner cross-section of the first terminal portion 8 also match each other. Owing to this correspondence between forms it is possible to couple in series several tubular elements 1 and thus form a rigid extension.

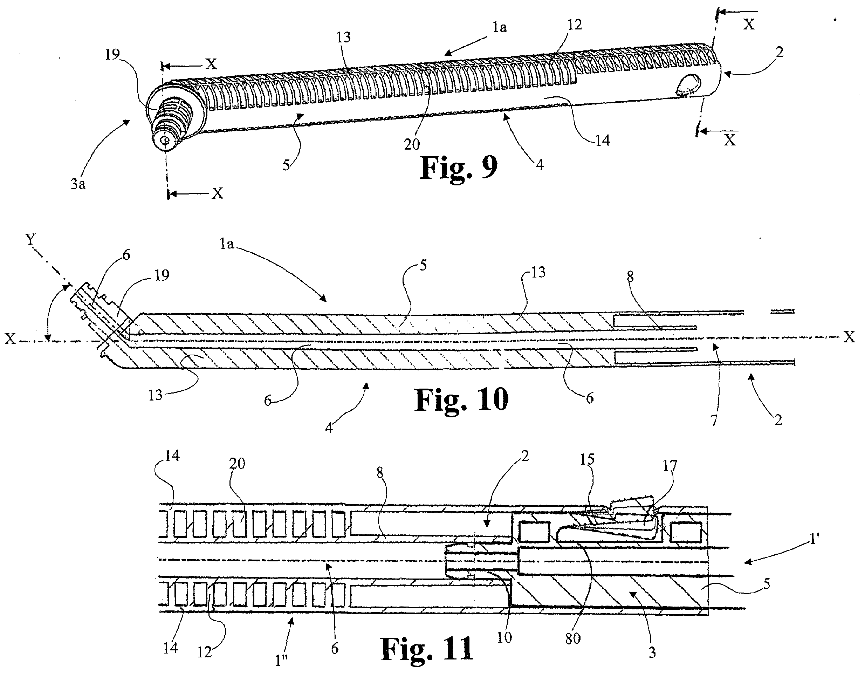

Figure 11 shows in detail the connection between two tubular elements 1' and 1" which is obtained with the projecting portion 10 of the element 1' inserted with a precision fit inside the first terminal portion 8 of the pipe 6 of the element 1" and with the plug 3 of the element 1' engaged inside the socket 2 of the element 1".

The plug 3 is also provided with a flexible tongue 15 which extends in a projecting manner and with angling of the surface of the plug 3 as far as a free end 16 thereof on which a button 17 with a cylindrical tubular body 17 is provided.

The latter is intended to be inserted inside an opening 18 of corresponding shape formed in a wall of the socket 2.

During engagement, the flexible tongue 15 of the first tubular element 1' is, in the closed position, pressed against the surface of the plug 3 by the walls of the cavity 7 of the socket 2 of the second tubular element 1" until the button 17 enters into the opening 18 and the flexible protuberance 15 can return into an open position, ensuring engagement between the button 17 and the opening 18. In operational terms, in order to disengage the two tubular elements 1' and 1", it is sufficient to press the button 17 so as to release it from the opening 18, and then extract the plug 3 of the element 1' from the socket 2 of the element 1".

A second embodiment of the invention is shown in Figures 9 and 10, where the tubular element is denoted in its entirety by 1a. Compared to the first embodiment, the differences are limited to the second end portion or plug, denoted in this case by 3a. This plug 3a extends no longer along the axis X, but along an axis Y which is inclined with respect thereto at an angle β. In accordance with this embodiment, the inner pipe 6 extends in the region of this plug 3a with a nozzle-like body 19.

The latter is intended to engage with a cleaning and steam supply accessory of the type known per se. The angle β, which is preferably equal to 45°, ensures optimum inclination between a surface to be treated with the accessory and an extension formed with tubular elements according to the invention.

The first end portion 2 of this latter constructional solution 1a is formed in a manner similar to that described above and again acts as an engaging seat for a further tubular element 1.

Advantageously, the two embodiments of tubular elements 1 and 1a described above may be considered not as alternative to each other, but as complementary. It is possible to envisage in fact that a rigid modular extension for conveying the steam is composed of a tubular element 1a with, engaged at one end, the steam supply accessory and one or more tubular elements 1 connected in series, depending on the various applicational requirements, to the other end of the said tubular element 1a.

In accordance with a further embodiment not shown in detail in the accompanying figures, several inner pipes 6, parallel to each other, are provided. In particular a second pipe which can be used with a suction flow is envisaged.

Advantageously, in accordance with the objects of the present invention, the tubular conveying elements described above have a limited weight and at the same time maintain good rigidity and mechanical strength characteristics.

The compromise between the need to provide a light tubular element and the need to ensure that it has, in all cases, a high mechanical strength has been achieved by providing an extensive finned surface area on the outer shell 5 of the tubular element 1. As can in fact be seen from Figures 1 and 9, the central portion 4 and the first end portion 2 of the tubular element 1, 1a are provided with a set of fins formed by a plurality of rigid ribs 12 which are arranged transversely with respect to the axis X and are connected together by two central arms 13 and two longitudinal flanges 14.

In both the embodiments of the tubular elements 1 and 1a, the form of the finned surface differs passing from the first end portion 2 to the central portion 4.

Along the central portion 4, as can be seen with greater detail in Figure 7, each rigid rib 12 extends radially over 360° from the inner pipe 6 to the outer circumferential profile of the shell 5, assuming the form of a circular rim concentric with the inner pipe 6. The two arms 13 extend along the axis X, connecting the ribs 12 over the whole of their radial thickness, while the two longitudinal flanges 14 are arranged on the outer circumferential profile of the shell 5, in positions opposite to each other and at an angular distance of about 90° from the abovementioned two arms 13.

Along the first end portion 2, instead, as can be seen from Figure 6, the rigid ribs 12, as well as the two arms 13, do not extend as far as the inner pipe 6, being limited by the two flat walls 70 of the cavity 7.

The volume delimited by two consecutive ribs 12 and by the corresponding parts of arms 13 is referred to below respectively as "through channel 20" in the case of the central portion 4 and as blind recess 21 in the case of the first end portion 2.

According to an important characteristic feature of the invention, the inner pipe 6 is directly accessible from the outside via the abovementioned through-channels 20. The importance of this characteristic feature will become clear from the description of the moulding method according to the present invention.

The rib-type configuration of this finned surface therefore has large empty volumes and allows a reduction in the actual weight of the outer shell 5 and consequently the quantity of plastic required. At the same time, the framework formed by the ribs 12, the arms 13 and by the longitudinal flanges 14 provides the tubular element 1, 1a with a high mechanical strength, the pipe 6 and the outer shell 5 being structured in the form of a single monobloc body.

The plastic materials preferred are nylon 6 or nylon 6,6 reinforced with glass fibre, since they able to ensure a high degree of structural stability at the usual temperatures of the steam used to clean objects and surfaces on both a domestic and industrial level. However, other plastics, such as PVC, may also be used.

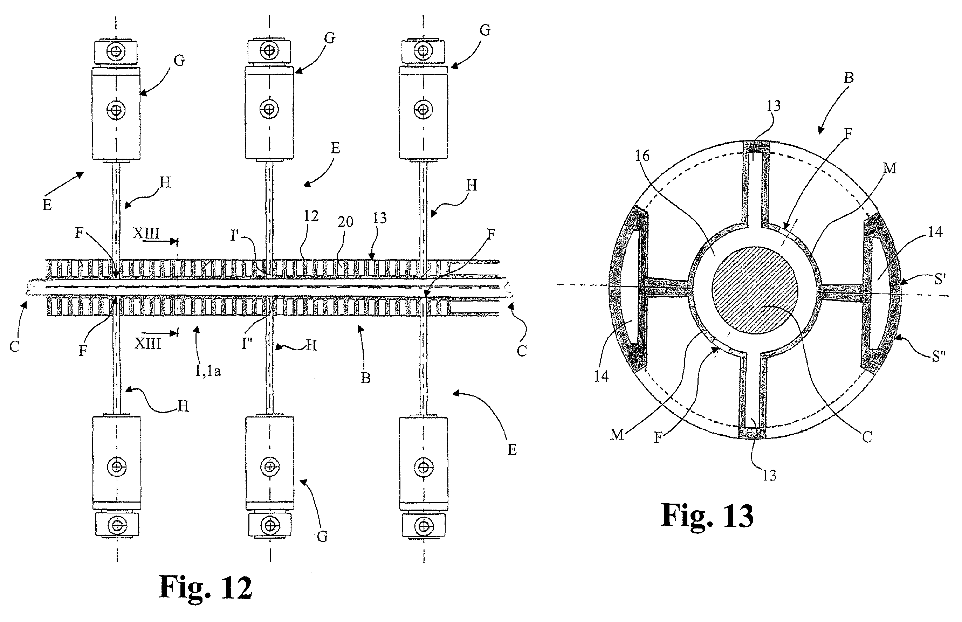

The moulding method according to the invention, used for production of the tubular steam-conveying elements described above, will be described with reference to Figures 12 to 18.

A machine A for the injection-moulding of plastic suitable for the production of tubular elements according to the method described hereinbelow is used.

The machine A has at least one mould B which is configured as two separate parts or half-shells S' and S" which are arranged next to each other before injection of the plastic. Two different moulds are envisaged, one for tubular elements according to the embodiment indicated by 1 and one for tubular elements according to the embodiment indicated by 1a.

In order to form the cavity of the inner pipe 6 of a tubular element 1 or 1a and if necessary the cavity of the second inner pipe mentioned above, the machine A has, for each mould B, at least one male element C parallel (or coaxial of only one) with the axis X of the said mould B. As will be described in detail below, it is envisaged that the male element C is movable and that its movement is translatory and in alignment with the mould B. In this way, the male element C performs, during each moulding cycle, an insertion stroke into the mould B before the injection step and a subsequent extraction stroke from the said mould during the same injection step. The male element C is fixed, at the end opposite to that with which it enters the mould, to a carriage D mounted slidably on guides L and actuated by a main jack N so as to perform the abovementioned "to-and-fro" translatory movement.

The liquefied plastic is introduced through a main nozzle U into a plurality of heated channels formed in the mould B, by means of which it is then injected at several points inside the mould. The tubular elements 1 and 1a thus obtained are distinguished by a homogeneous distribution of the plastic and by high mechanical strength characteristics.

The male element C during the injection step is supported and retained by clamping means E which balance the forces produced by the moulding pressures.

The clamping means E consist preferably of linear actuators, such as for example oil-hydraulic jacks G with rods H each having an engaging end I. The linear actuators are advantageously provided on both the half-shells S' and S" into which the mould is usually divided and are inserted with their rods H inside special through-holes F formed on the said half-shells S', S". In this way the corresponding engaging ends I may be inserted inside the mould until they retain the male element C in opposite directions so as to ensure a better sealing quality.

As shown in Figure 12, the engaging ends I are preferably operated in pairs. The thrust of each engaging end I' is thus counter-balanced by that of a corresponding engaging end I" which enters into contact with the male element C in the same section, but in the opposite direction.

As schematically shown in Figure 13, which shows a substantially central cross-section through the mould B, the holes F are formed in the mould inside the through-channels 20, in particular on the walls M of the mould. The latter define, together with the male element C, the thickness of the wall of the inner pipe 6.

In accordance with an embodiment not shown in the accompanying figures, the mould B is shaped for forming a tubular element according to the invention in which there is at least one cavity which extends over at least a certain length of said tubular element and through which said clamping means grip the male element C, being introduced into a corresponding hole F provided in the bottom of the abovementioned cavity. This cavity may be advantageously closed by means of a closing element which is inserted with engaging means into the said cavity. In particular, the cavities may be two in number in opposite positions.

The mould portion B where the abovementioned holes F are formed is preferably that corresponding to the central portion 4 of the tubular elements 1, 1a, since during the injection step the male element C is stressed most greatly precisely along this portion 4.

The movement of the linear actuators with respect to the holes F is controlled, depending on the stage reached in the injection process, by a control system which comprises a plurality of sensors and at least one controller consisting advantageously of a PLC (Programmable Logic Controller). On the basis of the signals received from the sensors, which are mounted for example on the engaging ends I of the actuators, the controller sends to the clamping means E the command causing them to be inserted or retracted.

The sensors most used for the control system and associated with the engaging ends I are heat sensors, but pressure sensors may also be usefully used.

The control system described above may advantageously envisage the use of one or more timers for regulating the movement of the clamping means depending on the duration established for the steps of the method.

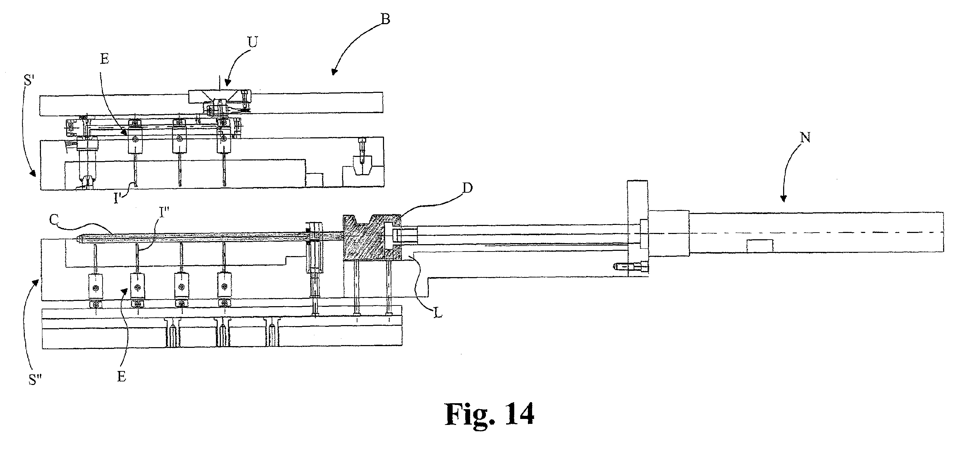

The first step of the method is the method involving insertion of the male element C inside the mould C, which is shown schematically in Figure 14. With the mould still open, the carriage D brings the male element C into the operating position.

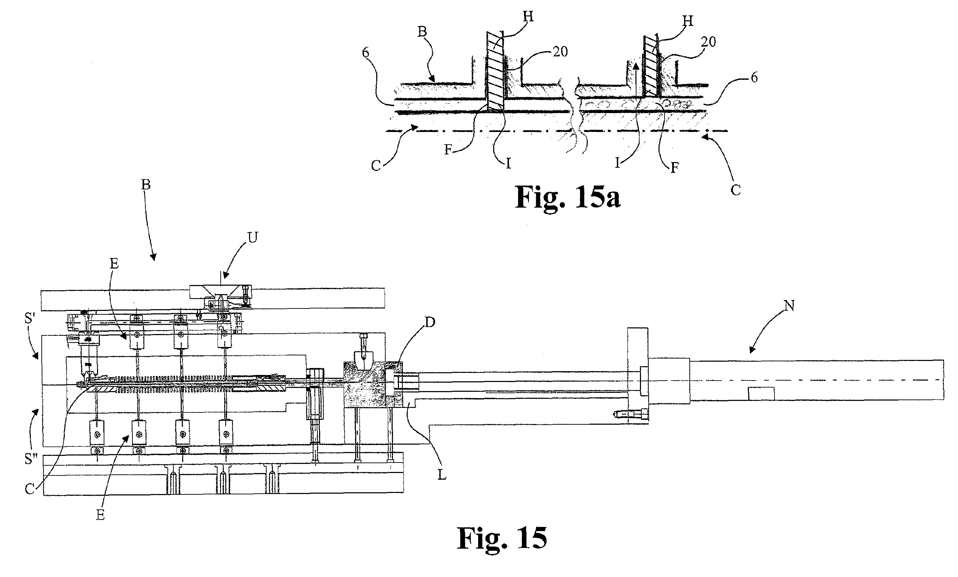

After the mould B has been closed, the step involving retention of the male element C occurs. As can be seen in Figure 15, during this step the clamping means E clamp the male element C with the corresponding engaging ends I which are inserted through the holes F provided in the mould (Fig. 12).

At this point of the method there follows the step of injecting plastic inside the mould, with pressures which may exceed 800 tons. The configuration of the mould and the various elements is the same as that shown in Figure 15. During the injection step the clamping means E prevent the male element from bending under the moulding pressures.

When the sensors located at the engaging ends I detect the presence of liquefied plastic, the control system causes the retraction of the engaging ends I over a section substantially equivalent to the thickness of the annular wall of the inner pipe 6, allowing the liquefied plastic to fill the resultant empty space, thus resulting in the step for removal of the clamping means. In greater detail (Figure 15a), each engaging end I is inserted inside a channel 20 and into the associated hole F and is retracted from the male element C during the removal step. The engaging end I thus acts as a stopper for the hole, preventing liquefied plastic from escaping during the injection step.

Once the plastic has solidified, the same removal step may envisage a final stage during which the clamping means E are retracted into a disengaged position (not shown) with respect to the tubular element formed.

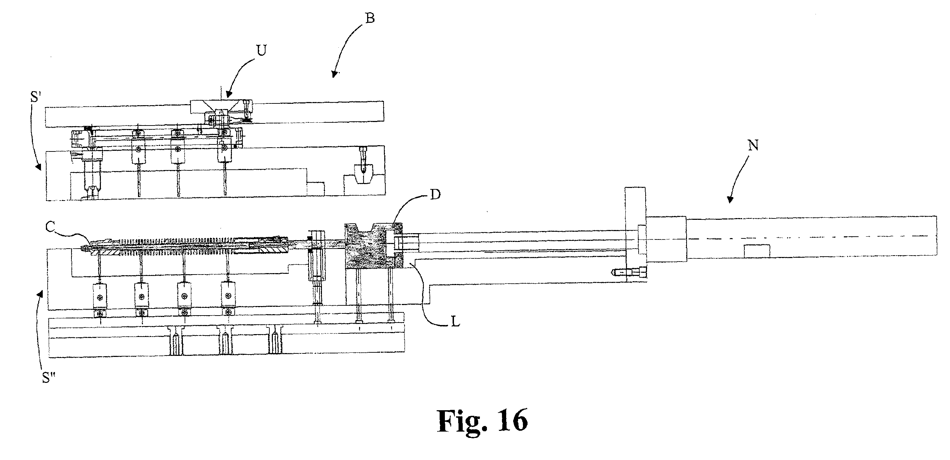

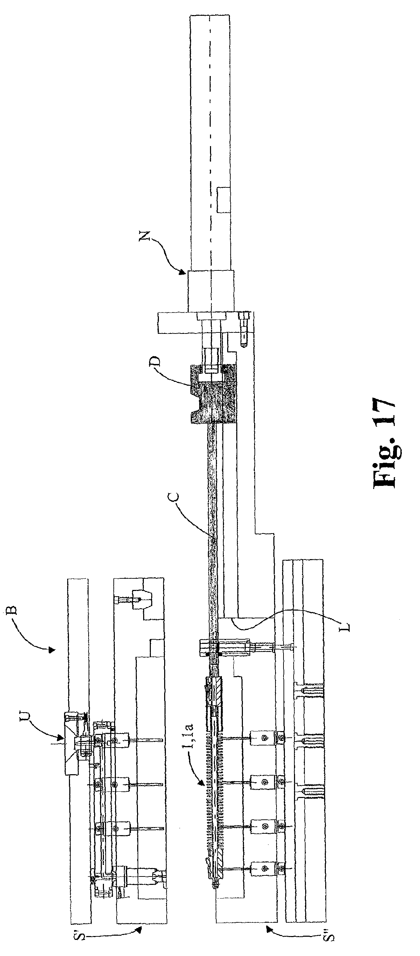

At this point the step of extracting the male element C from the mould B occurs. First the mould is opened (Figure 16) and then, while the plastic is rapidly cooling and hardening, the male element is extracted from the moulded part (Figure 17).

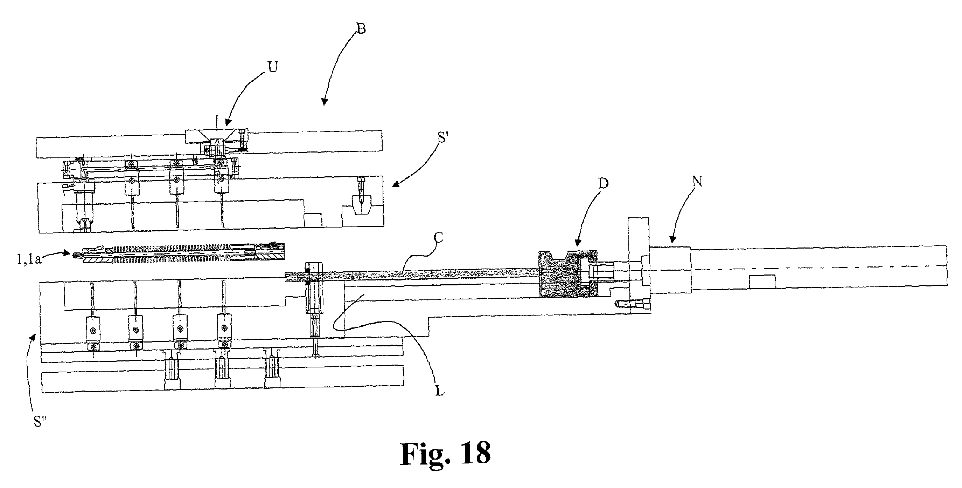

After the step of removal of the tubular element 1 or 1a (Figure 18), the machine A is ready for another processing cycle.

With the method according to the invention, therefore, it is possible to produce with a single moulding operation monobloc, tubular, steam-conveying elements without any restriction as to their length.

A considerable advantage also consists in the fact that further assembly stages need not be envisaged after the moulding operations, since the tubular element 1, 1a emerges from the moulds already complete and ready to be used. The elimination of the assembly steps means, moreover, that the method according to the invention is particularly advantageous and cost-efficient, also owing to the high degree of automation of the process which allows optimization of the processing steps, reducing the personnel required to supervise said process.

## Claims

1. Method for the injection-moulding of plastics in order to produce tubular steam-conveying elements, comprising the following operating steps:
- a step involving provision of at least one mould (B) shaped for forming of a tubular element (1;1a);
- a step involving insertion of at least one male element (C) inside said mould (B);
- a step involving retention of said male element (C) inside said mould (B) by means of clamping means (E) mechanically associated with said mould (B);
- a step involving injection of plastic into said mould (B) in order to obtain said tubular conveying element (1;1a);
- a step involving removal of said clamping means (E) during said injection step when said plastic is in the vicinity of or in contact with said clamping means (E);
- a step involving extraction of said male element (C);
- a step involving removal of said tubular element (1;1a) from said mould (B).

2. Moulding method according to Claim 1, in which said removal step envisages a final stage during which said clamping means (E) are retracted into a disengaged position with respect to said tubular element (1;1a).

3. Moulding method according to Claim 1, in which said mould (B) is shaped for forming of a tubular element (1;1a) comprising an outer shell (5) and an inner pipe (6) over at least part of the outer shell (5), there being envisaged at least one cavity extending over at least a certain length of said tubular element, through which clamping means (E) act so as to grip the male element (C) during said retention step, being inserted into at least one corresponding hole (F) provided on the mould at the bottom of said cavity.

4. Moulding method according to Claim 1, in which said mould (B) is shaped for forming of a tubular element (1;1a) comprising an outer shell (5) and an inner pipe (6), over at least part of the outer shell (5) there being provided a finned surface which defines a plurality of channels (20) through which said clamping means (E) act so as to grip the male element (C) during said retention step, being inserted into holes (F) provided on the mould at the bottom of said channels (20).

5. Method according to any one of the preceding claims, in which said clamping means (E) are arranged in the mould (B) so as to grip the male element (C) in several directions, in particular opposite directions, during the retention step.

6. Moulding method according to any one of the preceding claims, in which said clamping means (E) are operated by control means so as to grip said male element (C) during said retention step and release said male element (C) during said removal step.

7. Method according to any one of the preceding claims, in which said clamping means (E) are linear actuators.

8. Moulding method according to Claim 7, in which said linear actuators are oil-hydraulic jacks.

9. Moulding method according to any one of the preceding claims, in which the mould has a terminal part angled with respect to its main longitudinal extension.

10. Moulding method according to Claim 6, in which said control means comprise at least one timer and at least one controller which are electrically connected together.

11. Moulding method according to Claim 6, in which said control means comprise a plurality of sensors and at least one controller which are electrically connected together.

12. Moulding method according to Claim 11, in which said sensors are heat sensors or pressure sensors.

13. Moulding method according to Claim 11 or 12, in which said sensors are operationally associated with said clamping means (E) by means of said controller.

14. Moulding method according to any one of Claims 10 to 13, in which said controller is a logic control unit (PLC).

15. Tubular steam-conveying element, in particular obtained by means of the method according to the preceding claims, comprising an outer shell (5) and at least one inner pipe (6) which are mechanically connected together as a monobloc piece, **characterized in that** a cavity is formed over at least part of said outer shell (5), which cavity extends over at least a certain length of said tubular element and via which the inner pipe (6) can be reached from the outside.

16. Tubular steam-conveying element according to Claim 15, comprising a covering element for closing said cavity, which is inserted with engaging means into the said cavity.

17. Tubular steam-conveying element, in particular obtained by means of the method according to the preceding claims, comprising an outer shell (5) and at least one inner pipe (6), which are mechanically connected together as a monobloc piece (6), **characterized in that** a finned surface is formed over at least part of said outer shell (5), said surface defining a plurality of channels (20) via which the inner pipe (6) can be reached from the outside.

18. Tubular element according to Claim 17, in which said finned surface is provided with arms (12;13) which extend as far as the inner pipe (6).

19. Tubular element according to any one of Claims 15 to 18, having a length of between 20 and 70 cm.

20. Tubular element according to any one of Claims 15 to 19, in which said inner pipe (6) protrudes from the outer shell (5) with a nozzle body (19) extending so as to diverge from the axis of the said inner pipe (6).
